Europäisches Patentamt

(19) European Patent Office

Office européen des brevets

(11) Veröffentlichungsnummer: **0 304 453 B1**

(12) # EUROPÄISCHE PATENTSCHRIFT

(45) Veröffentlichungstag der Patentschrift :
11.12.91 Patentblatt 91/50

(51) Int. Cl.⁵ : **G05B 21/02**

(21) Anmeldenummer : 88902130.9

(22) Anmeldetag : 02.03.88

(86) Internationale Anmeldenummer :
PCT/EP88/00154

(87) Internationale Veröffentlichungsnummer :
WO 88/07230 22.09.88 Gazette 88/21

(54) **DIGITALES INTEGRIERMODUL FÜR ABTASTREGELEINRICHTUNGEN.**

(30) Priorität : 09.03.87 DE 3707498

(43) Veröffentlichungstag der Anmeldung :
01.03.89 Patentblatt 89/09

(45) Bekanntmachung des Hinweises auf die
Patenterteilung :
11.12.91 Patentblatt 91/50

(84) Benannte Vertragsstaaten :
AT CH DE FR GB IT LI

(56) Entgegenhaltungen :
Elektronik, No. 5, 9 March 1984 (München, DE),
H.-P. Becker: "Entwurf und Realisierung digitaler Regler mit Mikroprozessoren", Seiten
51-56

(73) Patentinhaber : SIEMENS
AKTIENGESELLSCHAFT
Wittelsbacherplatz 2
W-8000 München 2 (DE)

(72) Erfinder : BRICH, Peter
Ziehrer Str. 5
W-8522 Herzogenaurach (DE)
Erfinder : KOLB, Franz, Prof.
Sauerbruch Str. 3
W-7600 Offenburg (DE)
Erfinder : OBLASSER, Siegfried
Liegnitzer Str. 18
W-8520 Erlangen (DE)

EP 0 304 453 B1

## Beschreibung

Die Erfindung betrifft ein rückkoppelbares Integriermodul für Abtastregeleinrichtungen, bei dem der Zusammenhang zwischen dem Eingangs- und Ausgangssignal in jedem Abtastzeitpunkt bestimmt wird durch einen rekursiven Integrieralgorithmus, welcher durch Annäherung der Fläche unter einer kontinuierlichen Funktion mit Hilfe der Trapezregel gebildet ist.

Die Verwendung von Prozeß- und Mikrorechnern bei der Regelung und Automatisierung von technischen Systemen, welche sich durch hohe Verarbeitungsgeschwindigkeit und großen Speicher- und Adreßraum auszeichnen, bildet die technische Grundlage für die Realisierung leistungsfähiger Regelungssysteme. Voraussetzung für die volle Nutzbarkeit derartiger Rechner ist allerdings eine ausreichend genaue physikalisch/mathematische Beschreibung der zu regelnden Strecke z.B. in Form eines sogenannten "Modelles". Bekanntlich läßt sich das dynamische Verhalten zwischen den Ein- und Ausgängen einer Strecke im allgemeinen durch einen Satz von Differentialgleichungen unterschiedlicher Ordnung und gewöhnlichen Gleichungen beschreiben, welche unter Heranziehen der im jeweiligen System vorkommenden physikalischen Gesetzmäßigkeiten abgeleitet wurden.

Zur einheitlichen, mathematischen Beschreibung derartiger Gleichungssätze und deren formal standardisierter Behandlung bis hin zu einem darauf aufbauenden Entwurf und Auslegung geeigneter Regelungsstrategien haben sich in der modernen Regelungstechnik im wesentlichen zwei Methoden herausgebildet. Eine davon ist die bekannte "Frequenzbereichsmethode", bei der die Systemgleichungen vom Zeitbereich in den Frequenzbereich übertragen werden. Das dynamische Systemverhalten kann dort in Form von komplexen Übertragungsfunktionen bis hin zum Entwurf und der Auslegung entsprechender Regelungssysteme weiterverarbeitet werden.

Eine zweite, noch nicht allgemein verbreitete Methode zur einheitlichen mathematischen Beschreibung ist die Systemdarstellung im sogenannten "Zustandsraum". Hierbei werden die Systemgleichungen, welche in der Regel unterschiedliche Ordnung haben, im Zeitbereich durch eine geeignete Definition der Zustandsgrößen in einen Satz von Differentialgleichungen erster Ordnung übergeführt. Alle Eingangs-, Ausgangs- und Zustandsgrößen des Systems lassen sich dann vorteilhaft zu Vektoren zusammenfassen, welche im allgemeinen über je eine sogenannte "System-, Eingangs-, Ausgangs- und Durchgangsmatrix" miteinander verknüpft sind. Neben der einfachen mathematischen Verarbeitung einer derartigen Systembeschreibung mit Hilfe der Matrizenrechnung besteht ein weiterer Vorteil der Zustandsraumdarstellung darin, daß unter Voraussetzung der Linearität und Zeitinvarianz die Zustandsgleichungen mit Hilfe genormter Transformationen in in sogenannte "Normalformen" übergeführt werden können. Diese beschreiben zwar jeweils dasselbe physikalische System, und stellen somit äquivalente Beschreibungen des jeweiligen dynamischen Systemverhaltens dar. Bestimmte Struktureigenschaften der zu modulierenden Strecke, z.B. deren Eigenwerte, deren Steuerbarkeit bzw. Beobachtbarkeit, treten jedoch nach der Transformation der Zustandsgleichungen in eine der Normalformen besonders deutlich hervor. Die Normalformen bilden somit einen besonders geeigneten Ausgangspunkt für den Entwurf von Regelungsstrategien bzw. Reglerstrukturen. So kann z.B. der aktuelle Zustand eines konkreten Systems durch einen, z.B. in einem Rechner "mitlaufenden", das System modellierenden "Beobachter" simuliert werden, so daß dieser "innere" Zustand des Systems zugänglich wird und mittels geeigneter Regeleingriffe beeinflußt werden kann. Bekannte Normalformen sind z.B. die sogenannte "Jordan-Normalform" und verschiedene "Beobachterund Steuerungs-Normalformen".

Die Systembeschreibung mittels Zustandsgleichungen bzw. deren Darstellung in einer ausgewählten Normalform hat den weiteren Vorteil, daß diese sich besonders gut in Analog- und Digital-Rechnern realisieren läßt. Diese Systembeschreibung hat somit eine ausschlaggebende Bedeutung für die praktische Realisierung von technischen Abtastregelvorrichtungen. Die gute Handhabbarkeit wird insbesondere dadurch ermöglicht, daß die Normalformen zu einer standardisierten, blockorientierten, modularen Systemdarstellung führen. Die Anzahl solcher zur Modellierung einer technischen Strecke notwendigen "Blöcke" ist unmittelbar abhängig von der Ordnung des vorliegenden Systems, so daß eine Anpassung des Umfangs der jeweils benötigten Normalform an eine veränderte "Systemordnung" auf einfache Weise durch Hinzufügen bzw. Weglassen einer oder mehrerer Blöcke möglich ist. Ein weiterer Vorteil bei der technische Realisierung dieser Systembeschreibung besteht darin, daß alle Blöcke in einer der Normalformen identisch aufgebaut sind und bei der Darstellung im Zeitbereich im Kern je einen Integrierer erhalten. So besteht z.B. ein nach der Jordan-Normalform aufgebautes Streckenmodell aus der Parallelschaltung von einer der jeweiligen Systemordnung entsprechenden Anzahl von mit Koeffizienteneinstellern versehenen, getrennt rückgekoppelten Integrierern. Das komplexe Systemverhalten wird somit durch die Überlagerung der Reaktion von Untersystemen erster Ordnung nachgebildet. Dementsprechend besteht ein nach einer Beobachter- bzw. Steuerungs-Normalform aufgebautes Streckenmodell aus der Reihenschaltung von einer der jeweiligen Systemordnung entsprechende Anzahl von Integrierern, welche alle gemeinsam über Koeffizienteneinsteller rückgekoppelt sind. Auch hier setzt sich das komplexe System-

2

EP 0 304 453 B1

verhalten aus der Reaktion von Untersystemen erster Ordnung zusammen.

Es ist bekannt, beim praktisch technischen Aufbau derartiger Streckenmodelle bzw. darauf basierender "Beobachter" in einer digitalen Regel- und Automatisierungsvorrichtung den als Bauteil benötigten Integrierer mit Hilfe eines rekursiv arbeiten- den algorithmus nachzubilden. Dabei werden in jedem Abtastzeitnunkt die aktuellen Werte der Eingangsgrößen erfaßt und hieraus unter Zuhilfenahme von Größen, welche beim vorangegangenen Abtastzeitpunkt erfaßt bzw. berechnet und zwischengespeichert wurden, aktuelle Ausgangswerte bestimmt. Bei einem bekannten Algorithmus zur Nachbildung eines Integrierers wird die Fläche unter einer kontinuierlichen Zeitfunktion mit Hilfe der sogenannten "Rechteckregel" angenähert. Für diesen gilt die Beziehung

$$v_k = v_{k-1} + \frac{T_A}{T_I} \bullet u_{k-1}$$

mit

| | |
|---|---|
| $v_k$ | : Ausgangssignal im k-ten Abtastzeitpunkt |
| $v_{k-1}$ | : Ausgangssignal im (k-1)-ten Abtastzeitpunkt |
| $u_{k-1}$ | : Eingangssignal im (k-1)-ten Abtastzeitpunkt |
| $T_A$ | : Abtastzeit |
| $T_I$ | : Integrierzeitkonstante, |

welche z.B. dem Buch von Norbert Hoffmann, "Digitale Regelung mit Mikroprozessor", Vieweg-Verlag, 1983, auf der Seite 23/ unten zu entnehmen ist. Ein nach obiger Gleichung rekursiv arbeitender "Rechteckregelintegriermodul" hat den Vorteil, das er rückkopplungsfähig ist und somit als Bauelement z.B. in den oben beschriebenen Normalformen bei der Zustandsraumdarstellung technischer Systeme eingesetzt werden kann. Das Rechteckregel-integriermodul hat aber zum einen den Nachteil, daß es die I-Annäherung nur mit einem bleibenden mittleren Flächenfehler durchführt. Besonders von Nachteil ist desweiteren, daß z.B. bei der Inbetriebnahme eines derartigen Integriermoduls im Abtastzeitpunkt k-1 ($v_{k-1} = u_{k-1} = 0$) ein Ausgangssignal $v_k$ erst nach Ablauf einer Abtastzeit $T_A$ im darauffolgenden Abtastzeitpunkt k durch Bewertung des zum vorherigen Abtastzeitpunkt k-1 erstmalig abgetasteten Eingangswertes $u_{k-1}$ mit $T_A/T_I$ zur Verfügung steht. Dies wiederum hat z.B. in einem nach einer Beobachtungs- bzw. Steuerungs-Normalform aufgebauten Beobachter den Nachteil, daß eine Änderung des Eingangssignales erst nach Ablaui einer der Ordnund des Systems entsprechenden Anzahl von Abtastzeiten alle in Reihe geschalteten Integriermodule durchlaufen hat und vollständig am Ausgang des Beobachters "angekommen" ist. Bei einem derartig aufgebauten Streckenmodell ist somit mit einer erheblichen Reaktionszeit zu rechnen. Es hat sich gezeigt, daß zur Erhaltung der Stabilität die minimal nachzubildende Streckenzeitkonstante des Rechteckregelintegriermoduls mindestens um den Faktor 2 größer sein muß als die jeweils vorliegende Abtastzeit $T_A$.

Für eine Dynamisierung eines derartigen modularen Automatisierungssystem bieten sich zwei Wege an. Zum einen kann die Abtastzeit soweit verkleinert werden, daß ausreichend kleine Integrierzeitkonstanten unter Einhaltung des obengenannten Verhältnisses zur aktuellen Größe der Abtastzeit $T_A$ einstellbar sind. Gegen eine derartige Vorgehensweise spricht, daß die Abtastzeit eines Abtastregelsystems durch dessen inneren Aufbau und Organisation begrenzt ist, und ein solches System aus Gründen der Genauigkeit in der Regel bereits mit der größtmöglich einstellbaren Abtastzeit betrieben wird.

Ein anderer Weg zur Dynamisierung eines Abtastregelsystems besteht in der Verwendung leistungsfähigerer Algorithmen, welche ein günstigeres Verhältnis von Streckenzeitkonstante bzw. Integrierzeitkonstante zur jeweils vorliegenden Abtastzeit zulassen. Insbesondere bei einer Systembeschreibung mit Hilfe der Zustandsraummethoden bedeutet dies einen verbesserten Algorithmus zur numerischen Integration zu verwenden. So ist es bekannt, die Fläche unter einer kontinuierlichen Funktion mit Hilfe der sogenannten "Trapezregel" anzunähem. Ein hieraus gebildeter Integrieralgorithmus ist erheblich leistungsfähiger als der bekannte Rechteckregelalgorithmus, und z.B. in dem Buch von Wolfgang Latzel, "Regelung mit dem Prozeßrechner", P.I. Wissenschaftsverlag, 1977 insbesondere auf den Seiten 79 bis 91 beschrieben.

So gilt für den Integrieralgorithmus nach der Trapezregel die Beziehung

$$v_k = v_{k-1} + d_o \bullet (u_{k-1} + u_k)$$

mit

$$d_o = \frac{T_A}{2 . T_I}$$

| | |
|---|---|
| $T_A$ | : Abtastzeit |
| $T_I$ | : Integrierzeitkonstante |
| $v_k$ | : Ausgangssignal im k-ten Abtastzeitpunkt |
| $v_{k-1}$ | : Ausgangssignal im (k-1)-ten Abtastzeitpunkt |
| $u_k$ | : Eingangssignal im k-ten Abtastzeitpunkt |

3

$u_{k-1}$ : Eingangssignal im (k-1)ten Abtastzeitpunkt

Dieser Gleichung ist zu entnehmen, daß auch bei einem Start des Algorithmus z.B. in einem Abtastzeitpunkt k sofort mit einem Ausgangswert $d_o \bullet u_k$ zu rechnen ist, obwohl in diesem Moment noch keine Werte $v_{k-1}$ und $u_{k-1}$ von einer vorangegangenen Abtastung zur Verfügung stehen. Im Gegensatz zum Integrieralgorithmus nach der Rechteckregel "reagiert" folglich ein Integrierälgorithmus nach der Trapeazregel erheblich schneller auf Veränderungen des Eingangssignales. Ferner läßt sich zeigen, daß der mittlere Flächenfehler bei der numerischen Integration mit Hilfe der Trapezregel stets gleich Null ist, während dieser bei den numerischen Integration mit Hilfe der Rechteckregel mit der Abtastzeit zunimmt.

Voraussetzung für den Einsatz von Integriermodulen in einem modularen Streckenmodell, welches z.B. nach einer der bekannten Normalformen aufgebaut ist, ist deren beliebige Verschaltbarkeit und insbesondere Rückkoppelbarkeit. Ein nach der Trapezregel aufgebautes, rekursiv arbeitendes Integriermodul ist dagegen nicht rückkoppelbar. Dies beruht darauf, daß sich eine Veränderung des Eingangswertes ohne Verzögerung als ein sogenannter "Durchgangswert" direkt auf den Ausgangswert und somit über die Rückkopplung wiederum unverzögert auf den Eingangswert auswirkt und sofort. Wird dennoch versucht ein Trapezregelintegriermodul rückzukoppeln, so ergibt sich eine Gleichung, welche zur berechnung des aktuellen Ausgangswertes im jeweiligen Abtastzeitpunkt diesen erst zu berechnenden Ausgangswert selbst benötigt. Es gibt somit keine sinnvolle und ausführbare algorithmische Reihenfolge in der Bearbeitung der einzelnen Summanden dieser Gleichung. Bei einer gewaltsamen Rückkopplung eines solchen Elementes in einem Rechner würde die rekursive Rechnung sofort zum Erliegen kommen. Eine grundlegende Voraussetzung für die Diskretisierung eines kontinuierlichen Systems durch einen Algorithmus besteht aber gerade in dessen rekursiver Berechenbarkeit in den Abtastzeitpunkten.

Die Aufgabe der vorliegenden Erfindung besteht darin, ein Integriermodul anzugeben, dessen interner rekursiver Bearbeitungsalgorithmus durch Annäherung einer Fläche mit Hilfe der Trapezregel gebildet ist und das bei Aufrechterhaltung der bekannten dynamischen Eigenschaften des Trapezregelalgorithmus rückkoppelbar ist.

Diese Aufgabe wird erfindungsgemäß durch die kennzeichnenden Merkmale von Anspruch 1 gelöst. Weitere vorteilhafte Ausgestaltungen der Erfindung sind in den Unteransprüchen angegeben.

Anhand der nachfolgend kurz angeführten Figuren wird die Erfindung desweiteren näher erläutert. Dabei zeigt:

FIG 1 die Strukturdarstellung eines nach der Trapezregel rekursiv arbeitenden Integriermoduls in der sogenannten "Beobachter-Normalform",

FIG 2 eine weitere, modifizierte Strukturdarstellung des Moduls von FIG 1,

FIG 3 eine weitere, modifizierte Strukturdarstellung des Moduls von FIG 2,

FIG 4 eine Ausführungsform der Rückkopplung des Trapezregelintegriermoduls von FIG 2 bzw.3 gemäß der vorliegenden Erfindung,

FIG 5 eine weitere Ausführungsform des erfindungsgemäßen, rückkoppelbaren Trapezregelintegriermoduls,

FIG 6 die allgemeine Struktur eines in "Beobachter-Normalform" aufgebauten Streckenmodells n-ter Ordnung, und

FIG 7 beispielhaft ein unter Verwendung der erfindungsgemäßen rückkoppelbaren Trapezregelintegriermodule in "Beobachter-Normalform aufgebautes Streckenmodell 3-ter Ordnung.

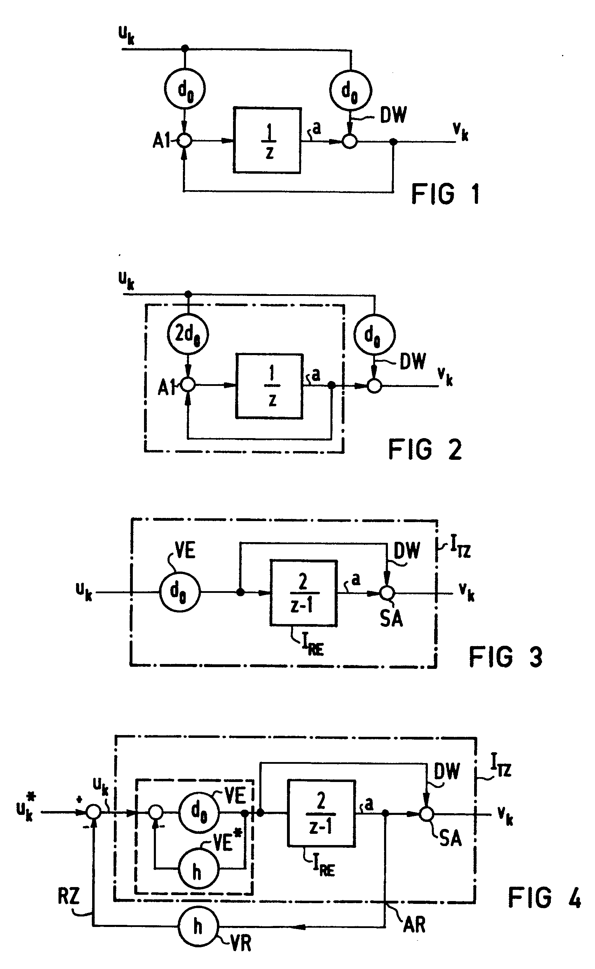

Die FIG 1 zeigt die bekannte Struktur eines nach der Trapezregel rekursiv in den Abtastzeitpunkten arbeitenden Integriermoduls, welche unter Zugrundelegung der "Beobachter-Normalform" aufgebaut ist. Das dabei mit dem aus der Theorie der linearen Abtastregelungen bekannten und als Grundlage zur sogenannten "z-Transformation" dienenden komplexen "Verschiebungsoperator"

$$\frac{1}{z} = e^{-p} \bullet {}^{T}A$$

bezeichnete Element von FIG 1 stellt bei der praktischen Implementierung in einem Digitalrechner einen Speicher bzw. ein Totzeitglied dar. Dieses liest den in einem Abtastzeitpunkt k-1 am Eingang anliegenden Wert $v_{k-1} + d_o \bullet u_{k-1}$, hält diesen für die Dauer einer Abtastzeit $T_A$ fest und gibt diesen schließlich im darauffolgenden Abtastzeitpunkt k am Ausgang als Wert a aus. Der weiter oben bereits angeführte Integrieralgorithmus nach der Trapezregel läßt sich somit unter Zugrundelegung der Darstellung von FIG 1 folgendermaßen darstellen:

$v_k =$    $a + DW$

$v_k =$    $(v_{k-1} + d_o \bullet u_{k-1}) + d_o \bullet u_k$

mit

DW: Durchgangswert.

Wie bereits oben ausgeführt wurde, läßt sich das Ausgangssignal $v_k$ dieses Trapezregelintegriermoduls

nicht direkt auf das Eingangssignal $u_k$ rückkoppeln. Um dennoch eine Rückkoppelbarkeit dieses Elementes unter Beibehaltung des "Eingangs-Ausgangsverhaltens" zu erreichen werden gemäß der vorliegenden Erfindung Umstrukturierungen vor genommen, welche in den Figuren 2 und 3 dargestellt sind.

So wird in einem ersten Schritt die Struktur von FIG 1 in die Struktur nach FIG 2 umgeformt, indem zum einen nicht mehr das Ausgangssignal $v_k$, sondern das Ausgangssignal a des Totzeitgliedes 1/z auf die Additionsstelle AI rückgeführt wird. Als Ausgleich für den nun nicht mehr rückgeführten Durchgangswert DW = $d_o \bullet u_k$ wird der Eingangswert $u_k$ nun mit dem Faktor 2 versehen der Additionsstelle AI zugeführt. Die Äquivalenz der Strukturen von FIG 1 und FIG 2 läßt sich leicht daran erkennen, daß in beiden Fällen der Additionsstelle AI der Wert

$$d_o \bullet u_k + a + d_o \bullet u_k$$

zugeführt wird. Es läßt sich zeigen, daß der in FIG 2 mit strichpunktierter Linie umgebene Teil einem nach der Rechteckregel aufgebauten "Rechteckregelintegriermodul" entspricht.

In der FIG 3 ist ein weiteren Schritt dargestellt, wobei der strichpunktierte Teil von FIG 2 gemäß der folgenden Berechnung

$$2 \bullet d_o \bullet \frac{\frac{1}{z}}{1 - \frac{1}{z}} = d_o \bullet \frac{2}{z - 1}$$

zu einem Gesamtelement $I_{RE}$ zusammengefaßt wurde. Ferner wurde der im Durchgangswertkanal DW und der im Eingangskanal des Rechteckregelintegriermoduls $I_{RE}$ befindliche Verstarkungsfaktor $d_o$ in Form eines Verstärkers VE in den Eingangsgrößenkanal zur direkten Bewertung der Eingangsgröße $u_k$ vorgezogen. Aufgrund der vorangegangenen Umformungen ist somit die Struktur von FIG 1 erfindungsgemäß übergegangen in einen nach der Rechteckregel arbeitenden internen Anteil $I_{RE}$, der so mit einem Durchgangswertkanal DW versehen ist, daß sich die Gesamtstruktur unverändert wie ein Trapezregelintegriermodul $I_{TZ}$ verhält.

Es ist ein besonderer Vorteil der Erfindung, daß die erfindungsgemäße Struktur des Trapezregelintegriermoduls $I_{TZ}$ gemäß FIG.3 bei Bedarf koppelt werden kann, daß dennoch eine rekursive, algorithmische Bearbeitung in einem Abtastregelsystem möglich ist. Zu diesem Zweck wird erfindungsgemäß Zunächst in einem weiteren Schritt nur der Teil der Struktur von FIG 3 rückgekoppelt, der rückkopplungsfähig ist. Wie bereits oben ausgeführt wurde, ist ein Rechteckregelintegriermodul uneingeschränkt rückkoppelbar. Aus diesem Grund dient erfindungsgemäß entsprechend der Darstellung von FIG 4 der Ausgang des internen Rechteckintegriermoduls $I_{RE}$ als ein separater Rückführausgang AR. Ein Rückkoppelzweig RZ kann somit bei Bedarf von diesem Ausgang AR z.B. über einen Rückkoppelverstärker VR, welcher einen Bewertungskoeffizienten h bereitstellt, zum Eingang des erfindungsgemäßen Trapezregelintegriermoduls $I_{TZ}$ gelegt werden. In einem letzten Schritt wird die bei einer derartigen Rückkopplung vorhandene Abweichung zwischen dem eigentlichen Ausgangssignal $v_k$ des Integriermoduls und dem Signal am Rückführausgang AR kompensiert. Hierzu gibt es mehrere Möglichkeiten. In der Ausführungsform der Erfindung gemäß FIG 4 ist eine Möglikeit dargestellt. Dabei wird der im rückgekoppelten Zwischenwert a nicht enthaltene Durchgangswert DW unter Umgehung des internen Rechteckregelintegriermoduls 2/(z - 1) mit Hilfe eines weiteren verstärters V* mit dem im Rückkoppelzweig RZ vorhandenen Bewertungsfaktor h versehen und getrennt auf den Eingang des erfindunsgemäßen Trapezregelintegriermoduls rückgeführt.

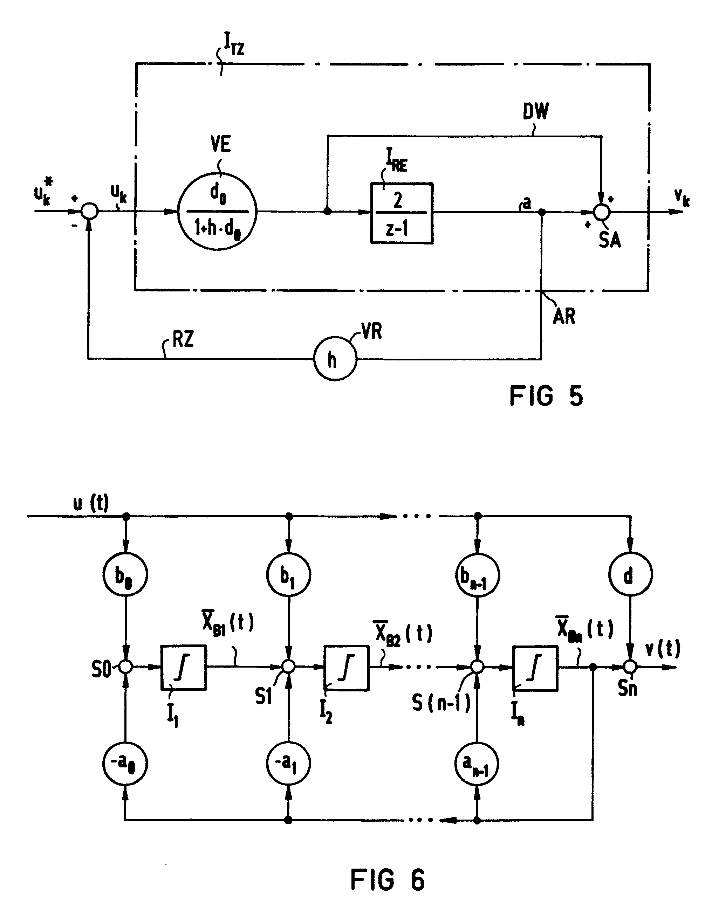

In der Ausführungsform der Erfindung gemäß der FIG 5 ist eine weitere Möglichkeit zur Korrektur der Abweichung des Signales a am Rückführausgang AR vom Ausgangssignal $v_k$ des erfindungsgemäßen Trapezregelintegriermoduls $I_{TZ}$ dargestellt. Die Korrektur erfolgt dabei direkt durch geeignete Wahl des über den ersten Verstärker VE bereitgestellten Bewertungsfaktors für das Eingangssignal $u_k$. Dieser ergibt sich durch unmittelbare Zusammen fassung der Faktoren $d_o$ und h der Elemente VE und VE* der getrennten Rückkoppelschleife in der FIG 4 zu

$$\frac{d_o}{1 + h \bullet d_o} .$$

Die FIG 6 zeigt beispielhaft die allgemeine Struktur eines in der sogenannten "Beobachter-Normalform" aufgebauten Streckenmodells n-ter Ordnung im Zeitbereich. Wie bereits oben ausgeführt wurde, besteht diese aus einer Reihenschaltung von n Integrierern $I_1$, $I_2$ ... $I_n$. Diese werden an ihren Eingängen über Additionsstellen S0, S1 ... S(n-1) mit dem über die Bewertungsfaktoren $b_0$, $b_1$... $b_{n-1}$ bewerteten Eingangssignal u versorgt. Ferner wird der Eingangswert u als "Durchgangswert mit dem Faktor d bewertet über die Additionsstelle Sn direkt auf das Ausgangssignal $x_{Bn}(t)$ der Reihenschaltung der Integrierer aufgeschaltet und trägt somit unverzögert zur Bildung des Ausgangssignals v bei. Man erkennt, daß alle Integrierer rückgekoppelt sind, indem das Signal $x_{Bn}(t)$ am Ausgang der Integriererkette mit den Faktoren $-a_0$, $-a_1$ ... $-a_{n-1}$ bewertet auf die Mischungsstellen $S_0$, $S_1$ ... S(n-1) am Eingang der jeweiligen Integrierer $I_1$, $I_2$ ... $I_n$ rückgeführt wird. Das erfindungsgemäße rückkoppelbare Trapezregelintegriermodul ist besonders geeignet, um bei der praktischen Implementierung eines Streckenmodells gemäß dem Prinzipschaltbild der FIG 6 bevorzugt in einem Abtastregelsystem als "Integrierer" zu dienen.

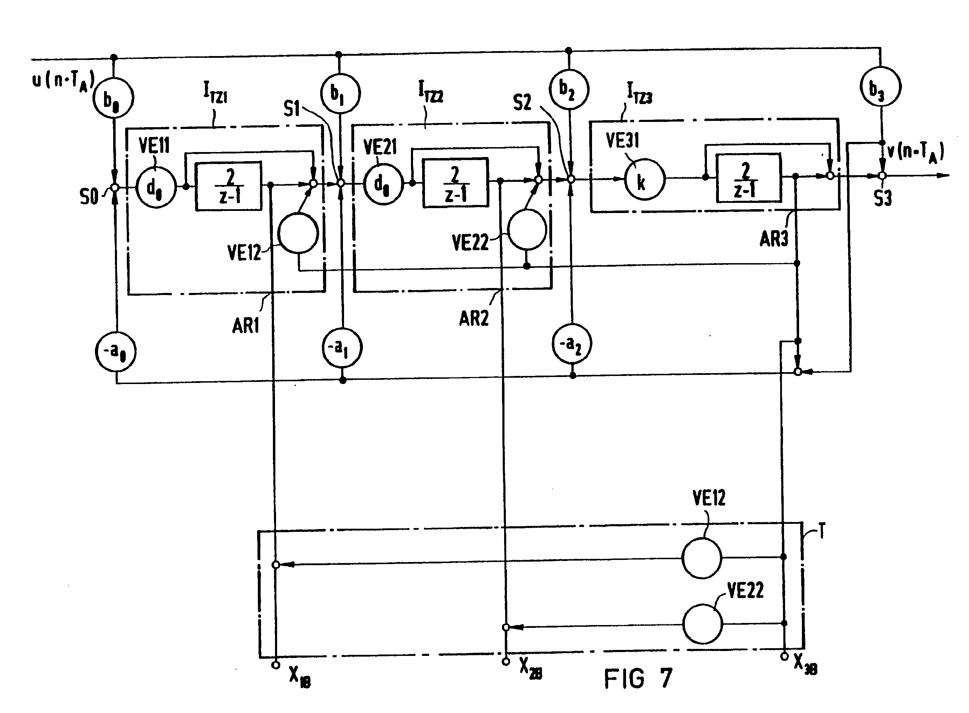

In der FIG 7 ist ein vorteilhaftes Ausführungsbeispiel für ein Streckenmodell dritter Ordnung in Beobachter-Normalform unter Verwendung der erfindungsgemäßen rückkoppelbaren Trapezregelintegriermodule dargestellt. Dieses Modell besteht somit aus der Reihenschaltung von drei Trapezregelintegriermodulen $I_{TZ1}$, $I_{TZ2}$, $I_{TZ3}$. Alle Integrierer sind unter Verwendung des Signals am Rückkoppelausgang AR3 des dritten Integriermoduls in der am allgemeinen Beispiel der FIG 6 erläuterten Weise über die Koeffizienten $-a_0$, $-a_1$, $-a_2$ rückgekoppelt. Die Korrektur der Abweichung des Signals am Rückführausgang vom Ausgangssignal des jeweiliden Integriermoduls sei am Beispiel des dritten Moduls $I_{TZ3}$ näher erläutert. Gemäß der in der FIG 5 dargestellten Ausführungsform erfolgt dabei die Korrektur mittels Einstellung eines geeigneten Korrekturwertes k am Verstärker VE31, wobei gilt

$$k = \frac{d_o}{1 + h \bullet d_o}$$

mit

$$h = a_2 + a_1 \bullet d_o + a_0 \bullet d_o^2 .$$

Der Verstärkungsfaktor h ergibt sich somit als Summe der Verstärkungsfaktoren von drei Rückkoppelzweigen. Der erste Rückkoppelzweig verläuft direkt vom Ausgang zum Eingang des dritten Integrierers und enthält den Verstärkungsfaktor $a_2$. Der zweite Rückkoppelzweig verläuft vom Ausgang des dritten Integrierers indirekt über den Durchgangswert des zweiten Integrierers $I_{TZ2}$ zum Eingang des dritten Integrierers und enthält den Verstärkungsfaktor $-a_1 \bullet d_o$. Der dritte Rückkoppelzweig verläuft schließlich vom Ausgang des dritten Integrierers indirekt über die Durchgangswerte der ersten und zweiten Integrierer $I_{TZ1}$, $I_{TZ2}$ und enthält den Verstarkungsfaktor $-a_0 - d_o \bullet d_o$.

Die Korrektur bei den anderen beiden Integriermodulen $I_{TZ1}$, $I_{TZ2}$ erfolgt in einer der Ausführungsform von FIG 4 sehr ähnlichen Weise. Dabei wird das Signal am Rückführausgang AR3 des dritten Integrierers über Verstärker VE12, VE22 bewertet auf die Ausgänge der jeweiligen Integriermodule aufgeschaltet. Die Verstärkungsfaktoren der Verstärker werden dabei entsprechend den Beziehungen

VE12:  $-a_0 \bullet d_o$

VE22:  $-a_1 \bullet d_o -a_0 \bullet d_o^2$

eingestellt.

Aus der Struktur von FIG 7 lassen sich die dazugehörigen drei Zustandsgrößen $X_{1B}$, $X_{2B}$, $X_{3B}$ mit Hilfe eines Transformations-netzwerkes T direkt aus den Signalen an den Rückführausgängen AR1, AR2, AR3 der erfindungsgemäßen Trapezregelintegriermodule $I_{TZ1}$, $I_{TZ2}$, $I_{TZ3}$ nachbilden. Zur Korrektur der Abweichungen zwischen den Signalen am jeweiligen Rückführausgang von den eigentlichen Ausgangssignalen müssen auch im Transformations-netzwerk T für den ersten und zweiten Integrierer die von den Verstärkern VE12, VE22 bekannten Bewertungsfaktoren mitberücksichtigt werden.

Es ist ein besonderer Vorteil des erfindungsgemäßen, rückkoppelbaren Trapezregelintegriermoduls, daß zur Aufrechterhaltung der Stabilität die minimal nachzubildende Streckenzeitkonstante im Gegensatz zum Rechteckregelintegriermodul lediglich größer oder gleich dem 0,5 fachen der jeweils vorliegenden Abtastzeit $T_A$ zu sein braucht. Ein weiterer Vorteil des erfindungsgemäßen Moduls besteht darin, daß es nicht nur zum Aufbau von Streckenmodellen bzw. Beobachtern bei den die Linearität des zu modulierenden Systems voraussetzenden, regelmäßig strukturierten Zustandsraum-Normalfnrmen eingesetzt werden kann. Vielmehr können hiermit auch nichtlineare Strukturen in einer an die jeweils vorliegenden Gegebenheiten individuell angepaßten Weise modular aufgebaut werden.

## Patentansprüche

1. Integriermodul ($I_{TZ}$) für Abtastregeleinrichtungen, bei dem der Zusammenhang zwischen dem Eingangs- und Ausgangssignal ($u_k$, $v_k$) in jedem Abtastzeitpunkt bestimmt wird durch einen ersten rekursiven Integrieralgorithmus, welcher durch Annäherung der Fläche unter einer kontinuierlichen Funktion mit Hilfe der Trapezregel gebildet ist, mit

a) einem internen Rechteckregelintegriermodul ($I_{RE}$), bei dem der Zusammenhang zwischen dem Eingangs- und Ausgangssignal in jedem Abtastzeitpunkt bestimmt wird durch einen zweiten rekursiven Integrieralgorithmus, welcher durch Annäherung der Fläche unter einer kontinuierlichen Funktion mit Hilfe der Rechteckregel gebildet ist,

b) eine ersten Verstärker (VE; VE11, VE21, VE31), welcher das Eingangssignal ($u_k$) des Integriermoduls

($I_{TZ}$) mit einem ersten Faktor $d_o = \dfrac{T_A}{2 \cdot T_I}$, mit $T_A$ als Abtastzeit und $T_I$ als Integrierzeitkonstante, bewertet und als Eingangssignal für das interne Rechteckregelintegriermodul ($I_{RE}$) und als einen Durchgangswert (DW) bereitstellt, und

c) eine ersten Summierer (SA), welcher die Summe aus dem Durchgangswert (DW) und dem Ausgangssignal (a) des internen Rechteckregelintegriermoduls ($I_{RE}$) als ein Ausgangssignal ($v_k$) des Integriermoduls ($I_{TZ}$) bereitstellt (FIG 3,4,5 und 7).

2. Vorrichtung nach Anspruch 1,
**dadurch gekennzeichnet,** daß bei Vorliegen eines Rückkoppelzweiges (RZ)

a) das Ausgangssignal (a) des internen Rechteckregelintegriermoduls ($I_{RE}$) als ein separater Rückführausgang (AR) zum Anschluß des Rückkoppelzweiges (RZ) dient, und

b) Mittel (VE, VE*; VE31, VE22, VE12) vorhanden sind, welche die Abweichung des Signales (a) am separaten Rückführausgang (AR) vom Ausgangssignal ($v_k$) des Integriermodules ($I_{TZ}$) korrigieren (FIG 4,5 und 7).

3. Vorrichtung nach Anspruch 2,
**gekennzeichnet** durch einen zweiten Verstärker (VE*) als Mittel zur Korrektur der Abweichung des Signales (a) am Rückführausgang (AR) vom Ausgangssignal ($v_k$) des Integriermodules ($I_{TZ}$), welcher den Durchgangswert (DW) mit einem zweiten Faktor (h) bewertet und invertiert auf das Eingangssignal (u) des Integriermodules ($I_{TZ}$) aufschaltet, wobei der zweite Faktor (h) dem jeweiligen Verstärkungsfaktor im Rückkoppelzweig (RZ) entspricht (FIG 4).

4. Vorichtung nach Anspruch 2,
**dadurch gekennzeichnet,** daß als Mittel zur Korrektur der Abweichung des Signales (a) am separaten Rückführausgang (AR) vom Ausgangssignal ($v_k$) des Integriermodules der erste Verstärker (VE, VE31) dient, wobei dessen Verstärkungsfaktor entsprechend der Beziehung

$$\frac{d_o}{1 + h \cdot d_o}$$ eingestellt wird, mit

h: Verstärkungsfaktor im Rückkoppelzweig (RZ) (FIG 5 und 7).

## Revendications

1. Module d'intégration ($I_{TZ}$) pour des dispositifs de réglage à échantillonnage, dans lequel la relation entre les signaux d'entrée et de sortie ($u_k, v_k$) est déterminée à chaque instant d'échantillonnage, au moyen d'un premier algorithme d'intégration récursif, qui est formé par approximation de la surface située au-dessous d'une fonction continue, au moyen de la règle du trapèze, et comportant

a) un module interne d'intégration utilisant la règle du rectangle ($I_{RE}$), dans lequel la relation entre les signaux d'entrée et de sortie est déterminée à chaque instant par un second algorithme d'intégration récursif, qui est formé par approximation de la surface située au-dessus d'une fonction continue, à l'aide de la règle du rectangle,

b) un premier amplificateur (VE; VE11, VE21, VE31), qui pondère le signal d'entrée ($u_k$) du module d'intégration ($I_{TZ}$), par un premier facteur $d_o = \dfrac{T_A}{2.T_I}$, $T_A$ étant la durée d'échantillonnage et $T_I$ la constante de temps d'intégration, et le prépare en tant que signal d'entrée pour le module interne d'intégration ($I_{RE}$) utilisant la règle du rectangle et en tant que valeur de transit (DW), et

c) un premier additionneur (SA) qui prépare la somme de la valeur transit (DW) et du signal de sortie (a) du modulateur de l'intégration ($I_{RE}$) appliquant la règle du rectangle, en tant que signal de sortie ($v_k$) du module d'intégration ($I_{TZ}$) (figure 3, 4, 5 et 7).

2. Dispositif suivant la revendication 1,
caractérisé par le fait que dans le cas de la présence d'une branche de réaction (RZ)

a) le signal de sortie (a) du module interne d'intégration ($I_{RE}$) appliquant la règle du rectangle est utilisé en tant que sortie séparée de renvoi (AR) pour le raccordement de la branche de réaction (RZ), et

b) il est prévu des moyens (VE, VE*; VE31, VE22, VE12), qui corrigent l'écart entre le signal (a) présent sur la sortie séparée de renvoi (AR) et le signal de sortie ($v_k$) du module d'intégration ($I_{TZ}$) (figures 4, 5 et 7).

3. Dispositif suivant la revendication 2,
caractérisé par un second amplificateur (VE*) en tant que moyen pour corriger l'écart entre le signal (a) sur la sortie de renvoi (AR) et le signal de sortie ($v_k$) du module d'intégration ($I_{TZ}$), qui pondère la valeur de transit (DW) par un second facteur (h) et l'ajoute, en l'inversant, au signal d'entrée (u) du module d'intégration ($I_{TZ}$), le second facteur (h) correspondant au facteur d'amplification dans la branche de réaction (RZ) (figure 4).

4. Dispositif suivant la revendication 2, caractérisé par le fait que le premier amplificateur (VE, VE31) est utilisé comme moyens pour corriger l'écart entre le signal (a) situé sur la sortie séparée de renvoi (AR) et le signal de sortie ($v_k$) du module d'intégration, le facteur d'amplification de cet amplificateur étant réglé conformément à la relation

$$\frac{d_o}{1 + h \cdot d_o}$$

avec h : facteur d'amplification dans la branche de réaction (RZ) (figures 5 et 7).

## Claims

1. Integrating module ($I_{TZ}$) for sampling control devices, in which the relationship between the input and output signal ($u_k$, $v_k$) in each sampling instant is determined by means of a first recursive integrating algorithm, which is formed through approximation of the area under a continuous function with the aid of the trapezium rule, having

a) an internal rectangular rule integrating module ($I_{RE}$), in which the relationship between the input and output signal in each sampling instant is determined by means of a second recursive integrating algorithm, which is formed through approximation of the area under a continuous function with the aid of the rectangular rule,

b) a first amplifier (VE; VE11, VE21, VE31) which evaluates the input signal ($u_k$) of the integrating module

($I_{TZ}$) with a first factor $d_o = \dfrac{T_A}{2 \cdot T_I}$, with $T_A$ as sampling time and $T_I$ as integrating time constant, and prepares it as input signal for the internal rectangular rule integrating module ($I_{RE}$) and as a bypass value (DW), and

c) a first summing unit (SA) which prepares the sum of the bypass value (DW) and the output signal (a) of the internal rectangular rule integrating module ($I_{RE}$) as an output signal ($v_k$) of the integrating module ($I_{TZ}$) (Figures 3, 4, 5 and 7).

2. Device according to claim 1, characterized in that with the presence of a feedback branch (RZ)

a) the output signal (a) of the internal rectangular rule integrating module ($I_{RE}$) serves as a separate return output (AR) to the connection of the feedback branch (RZ), and

b) means (VE, VE*; VE31, VE22, VE12) are present which correct the deviation of the signal (a) at the separate return output (AR) from the output signal ($v_k$) of the integrating module ($I_{TZ}$) (Figures 4, 5 and 7).

3. Device according to claim 2, characterized by a second amplifier (VE*) as means for the correction of the deviation of the signal (a) at the return output (AR) from the output signal ($v_k$) of the integrating module ($I_{TZ}$), which evaluates the bypass value (DW) with a second factor (h) and connects it, inverted, to the input signal (u) of the integrating module ($I_{TZ}$), whereby the second factor (h) corresponds with the respective amplification factor in the feedback branch (RZ) (Figure 4).

4. Device according to claim 2, characterized in that the first amplifier (VE, VE31) serves as means for the correction of the deviation of the signal (a) at the separate return output (AR) from the output signal ($v_k$) of the integrating module, whereby the amplification factor of the amplifier is adjusted corresponding to the equation

$$\frac{d_o}{1 + h \cdot d_o}$$

with h: amplification factor in the feedback branch (RZ) (Figures 5 and 7).

FIG 1

FIG 2

FIG 3

FIG 4

FIG 5

FIG 6

FIG 7